# EUROPÄISCHE PATENTSCHRIFT

(11) **EP 1 230 114 B1**
(45) Veröffentlichungstag und Bekanntmachung des Hinweises auf die Patenterteilung: **04.01.2006**
(21) Anmeldenummer: 00971354.6
(22) Anmeldetag: 10.10.2000
(51) Int. Cl.: B60T 8/00

(54) **VERFAHREN ZUR ERKENNUNG EINES FREIDREHENDEN RADES IN EINEM KRAFTFAHRZEUG**
METHOD FOR DETECTING A FREELY ROTATING WHEEL ON A VEHICLE
PROCEDE DE DETECTION D'UNE ROUE TOURNANT LIBREMENT DANS UN VEHICULE A MOTEUR

(30) Priorität: 02.11.1999 DE 19952711; 13.05.2000 DE 10023521
(43) Veröffentlichungstag der Anmeldung: 14.08.2002
(73) Patentinhaber: Continental Teves AG & Co. oHG, 60488 Frankfurt (DE)
(72) Erfinder: KLUSEMANN, Rainer, 60529 Frankfurt am Main (DE); STÖCKMANN, Ulrich, 64289 Darmstadt (DE)
(86) Internationale Anmeldenummer: PCT/EP2000/009940
(87) Internationale Veröffentlichungsnummer: WO 2001/032485

(56) Entgegenhaltungen:
- DE-A- 4 009 355
- DE-A- 4 234 819
- DE-A- 4 314 830
- DE-A- 4 327 491
- DE-A- 19 537 791

## Beschreibung

Die Erfindung betrifft ein Verfahren zur Erkennung eines freidrehenden Rades in einem Kraftfahrzeug gemäß Oberbegriff von Anspruch 1.

Einige Kraftfahrzeugtypen neigen in Kurven oder in extremen Fahrzuständen zu einem Abheben des auf der Kurveninnenseite angeordneten Hinterrades oder zumindest zu einer so starken Entlastung dieses Hinterrades, daß dieses sich gelegentlich nicht mehr in Kontakt zur Fahrbahn befindet. Je nach Abstimmung des Fahrzeug, insbesondere der Fahrwerk-, Feder- und Dämpferabstimmung, ist dieser Effekt mehr oder weniger stark ausgeprägt.

Sind die Kraftfahrzeuge mit elektronischen Systemen zur Bremskraftregelung (ABS, ASR) oder Fahrdynamikregelung (ESP) ausgestattet, so werden durch die Elektronik bekanntlich die Radgeschwindigkeiten, die an den einzelnen Rädern durch Raddrehzahlsensoren gemessen werden, verarbeitet. Ein Verfahren mit einer Antriebsschlupfregelung (ASR), bei dem in Abhängigkeit von Radsensorsignalen auf das Verhalten beim Durchrutschen reagiert wird, ist in der DE 38 09 101 A1 beschrieben.

In der DE-A-195 37 791 ist ein Verfahren zur Ermittlung der Fahrgeschwindigkeit eines Kraftfahrzeuges beschrieben, bei dem eine Ermittlung der Fahrzeuglängsgeschwindigkeit aus den vier Schwerpunktgeschwindigkeiten durchgeführt wird. Nach dem bekannten Verfahren werden die vier Raddrehzahlen bzw. Radgeschwindigkeiten auf bekannte Weise ermittelt. Dabei wird unter Umständen in Abhängigkeit von der Fahrsituation die Raddrehzahl einzelner Räder zur Bestimmung der Fahrgeschwindigkeit nicht ausgewertet, insbesondere wenn bei einem Rad Schlupf vermutet werden kann. Das bekannte Verfahren leistet keinen Beitrag bei der Erkennung eines freidrehenden Rades.

Löst sich bei einem Kraftfahrzeug mit einem wie vorstehend beschriebenen elektronischen System ein Rad vom Boden, so entspricht die gemessene Radgeschwindigkeit des abgelösten Rades nicht mehr der tatsächlichen Relativgeschwindigkeit des Fahrzeugs im Bereich des abgelösten Rades zur Fahrbahn. Es kommt dann zu einer Fehlinterpretation des aktuellen Fahrzeugzustands durch das elektronische System, zum Beispiel bei der Bildung der Fahrzeugreferenzgeschwindigkeit.

Die Erfindung setzt sich zum Ziel, eine Fehlinterpretation der Radsensorsignale durch das elektronische System aufgrund eines abgelösten Hinterrades zu vermeiden.

Diese Aufgabe wird gelöst durch ein Verfahren zur Erkennung eines freidrehenden Rades (1) in einem Kraftfahrzeug (2) in einem extremen Fahrzustand gemäß Anspruch 1.

Ein extremer Fahrzustand, bei dem sich ein Rad von der Fahrbahn ablöst und frei dreht, kann insbesondere bei schnell gefahrenen Kurven auftreten. In der Regel handelt es sich bei einer Kurvenfahrt in Vorwärtsrichtung bei dem abgelösten Rad um das kuveninnere Hinterrad. Zum Erkennen eines abgelösten Rades läßt sich beispielsweise ein ohnehin bei elektronischen Bremssystemen vorhandenes Radsensorsignal ausnutzen, welches insbesondere die Umlaufgeschwindigkeit des Rades angibt.
Fährt das Fahrzeug in eine Kurve, überprüft beispielsweise ein Mikroprozessor das auf der Kurveninnenseite nachlaufende Rad. Ist die Umlaufgeschwindigkeit z.B. größer als eine theoretisch mögliche Umlaufgeschwindigkeit dieses Rades bei Kontakt mit der Fahrbahn, so hat sich das Rad von der Fahrbahn gelöst. Die theoretisch mögliche Umlaufgeschwindigkeit des zu überprüfenden Rades hängt im allgemeinen vom Fahrzeug ab und liegt in einem festgelegten, meist von der Fahrzeuggeschwindigkeit abhängigen, Wertebereich.

Unter dem Begriff "nachlaufende Räder" werden im Sinne der Erfindung solche Räder verstanden, die in Fahrtrichtung gesehen im hinteren Fahrzeugbereich, vorzugsweise an der hinteren Achse, angeordnet sind. Bei einem vorwärts fahrenden Fahrzeug sind dies beispielsweise die Räder der Hinterachse, bei einem rückwärts fahrenden Fahrzeug handelt es sich um die Räder der Vorderachse.
Bei vorlaufenden Rädern handelt es sich um die Räder, die an einem Fahrzeug in Fahrtrichtung, vorzugsweise an der Vorderachse angeordnet sind.
Unter der Kurveninnenseite wird die Seite der Kurve verstanden, die den engeren Radius hat.

Unter Kraftfahrzeugen werden alle Arten von Fahrzeugen verstanden, die mit Radsensoren ausgestattet sind, insbesondere Personenkraftwagen und Lastkraftwagen.

Bevorzugt wird die theoretisch mögliche Umlaufgeschwindigkeit mit der Umlaufgeschwindigkeit des auf der Kurvenaußenseite liegenden nachlaufenden Rades berechnet.

Die theoretisch mögliche Umlaufgeschwindigkeit kann vorzugsweise mit der Fahrzeuggeschwindigkeit berechnet werden.

Besonders bevorzugt fließt in die Berechnung der theoretisch möglichen Umlaufgeschwindigkeit jedoch sowohl die Umlaufgeschwindigkeit des auf der Kurvenaußenseite liegenden nachlaufenden Rades, als auch die aktuelle Fahrzeuggeschwindigkeit ein.

Die Kurvenfahrt und Kurvenrichtung wird bevorzugt erkannt durch eine oder mehrere Maßnahmen aus der Gruppe:
Vergleich der Umlaufgeschwindigkeiten der vorlaufenden Räder (V.vl,V.vr) miteinander,
Auswertung des Signals eines Gierratensensors (G),
Auswertung des Signals eines Lenkwinkelsensors (L),
Auswertung des Signals eines Querbeschleunigungssensors (Q),
Auswertung der Umlaufgeschwindigkeit aller Räder (V.vl,V.vr,V.hl,V.hr) über einen zurückliegenden Zeitraum,
der vor dem Abheben des Hinterrades liegt.

Besonders bevorzugt werden die Signale einiger der vorstehend aufgeführten Möglichkeiten zur Erkennung einer Kurvenfahrt dazu benutzt, das Ergebnis einer anderen der aufgeführten Möglichkeiten auf eine Fehlinterpretation hin zu überprüfen. Ganz besonders bevorzugt wird nur dann auf eine Kurvenfahrt geschlossen, wenn alle herangezogenen Möglichkeiten eine Kurvenfahrt in die gleiche Kurvenrichtung erkennen lassen.
Wird beispielsweise aus den Umlaufgeschwindigkeiten der Vorderräder auf eine Linkskurve geschlossen, so muß ein ausreichender Lenkwinkel nach links, eine Querbeschleunigung und eine Gierrate in richtiger Richtung mit einer bestimmten Mindestgröße, welche abhängig von der gefahrenen Geschwindigkeit ist, vorhanden sein.

Auf ein freidrehendes Rad wird vorzugsweise erkannt, wenn die Geschwindigkeit des auf der Kurveninnenseite nachlaufenden Rades größer ist, als die theoretisch maximal mögliche Umlaufgeschwindigkeit dieses Rades bei Kontakt mit der Fahrbahn.

Die theoretisch mögliche Umlaufgeschwindigkeit liegt im allgemeinen in einem Wertebereich, der durch in der Praxis sinnvolle Sicherheitsgrenzen erweitert werden kann. Liegt die gemessene Umlaufgeschwindigkeit nicht mehr in diesem möglichen Bereich, so wird auf ein abgehobenes Rad erkannt. Die theoretisch maximal mögliche Umlaufgeschwindigkeit stellt die Obergrenze des Bereichs für die theoretisch mögliche Umlaufgeschwindigkeit dar. Sie wird vorzugsweise berechnet durch Bildung der Summe aus der Umlaufgeschwindigkeit des auf der Kurvenaußenseite liegenden nachlaufenden Rades und einem ersten Schwellenwert S1, welcher als sinnvolle Sicherheitsgrenze den Bereich erweitert.

Der erste Schwellenwert S1 ist bevorzugt eine vom momentanen Fahrzeugzustand abhängiger Wert. Besonders bevorzugt ist S1 von der Fahrzeuggeschwindigkeit abhängig, insbesondere in der Weise, daß sich bei höheren Fahrzeuggeschwindigkeiten der Wert für S1 verringert. Der Wert von S1 ist eine Größe, die von Fahrzeugdaten, insbesondere der Fahrzeuggeometrie, wie etwa Fahrzeuglänge oder Radstand ebhängt. Der Fachmann kann geeignete Werte anhand von Fahrzeugfeldversuchen, beispielsweise unter Aufzeichnung der Radgeschwindigkeiten, ermitteln. Vorzugsweise liegt der Wert von S1 in einem Bereich von etwa 3 bis etwa 11 km/h.

Fährt das Fahrzeug beispielsweise schnell durch eine Kurve, so kann der Wert für S1 kleiner sein, als bei einer langsamen Kurvenfahrt. Bevorzugt ist S1 eine Funktion f ( V ), wobei V die Fahrzeuggeschwindigkeit ist. Es handelt sich bei der Funktion zweckmäßigerweise um eine streng monoton abnehmende stetige oder eine vorzugsweise in Stufen verlaufende Funktion, die sich insbesondere einem Grenzwert G annähert. Demzufolge verringert sich S1 bei sehr hohen Geschwindigkeiten praktisch nicht mehr. Der besagte Grenzwert G liegt bevorzugt in einem Bereich von etwa 2 bis etwa 7 km/h.

Bei Kurvenfahrten hat in der Regel das kurvenäußere nachlaufende Rad eine größere Umlaufgeschwindigkeit, als das gegenüberliegende kurveninnere nachlaufende Rad. Der erste Schwellenwert S1 ist daher vorzugsweise mindestens so groß gewählt, wie die maximale Differenz der Umlaufgeschwindigkeiten der nachlaufenden Räder bei geringst möglichem Kurvenradius des Fahrzeugs.

Ein freidrehendes Rad liefert keine sinnvollen Informationen über beispielsweise die Fahrzeuggeschwindigkeit mehr. Vorzugsweise wird daher solange ein freidrehendes Rad vorliegt, die Meßgröße für die Umlaufgeschwindigkeit dieses Rades nicht an weitere im Fahrzeug vorhandene elektronische Systeme, insbesondere elektronische Bremssysteme (ABS) Antriebsschlupfregelung oder Fahrdynamiksysteme, weitergeleitet. Die Erfindung bezieht sich besonders bevorzugt auf Fahrzeuge, die mit einer Antriebsschlupregelung ausgestattet sind.

Es ist sinnvoll und daher bevorzugt, für die Meßgröße der Umlaufgeschwindigkeit des freidrehenden Rades eine Ersatzgröße zu bilden, die anstelle der nicht herangezogenen Meßgröße an die elektronischen Systeme weitergeleitet wird.

Die Erkennung, ob eine Kurvenfahrt vorliegt, kann durch einen zweiten Schwellenwert S2 unempfindlicher gemacht werden, so daß nur dann auf Kurvenfahrt erkannt wird, wenn eine Kurve gefahren wird, die hinreichend eng ist, daß es zu einem abgehobenen Rad kommen kann. Störende Einflüsse, die in diesem Zusammenhang zu einer Fehlinterpretation führen können sind beispielsweise ein rutschiger Untergrund oder eine stark unebene Fahrbahn. Vorzugsweise wird nur dann auf Kurvenfahrt erkannt, wenn die Größe zur Ermittlung des Kurvenradius einen zweiten Schwellenwert S2 überschreitet.

Die Größe, die den Kurvenradius angibt beziehungsweise ein geeignetes Maß für den Kurvenradius ist, kann, wie weiter oben beschrieben, im Sinne der Erfindung auf unterschiedliche Weise bestimmt werden. Besonders einfach läßt sich die Größe zur Ermittlung des Kurvenradius bevorzugt aus der Differenz der Umlaufgeschwindigkeit der vorlaufenen Räder berechnen.
Wird der Kurvenradius auf diese Weise bestimmt, kann der zweite Schwellenwert S2 als eine konstante Umlaufgeschwindigkeit aufgefaßt werden. Vorzugsweise liegt der Wert von S2 in einem Bereich von etwa 0,2 bis etwa 2 km/h.

Erfindungsgemäß übermitteln die Räder jeweils Informationen über deren Umlaufgeschwindigkeit an ein Mittel zur Auswertung von Fahrzeugdaten, welches beispielsweise eine elektronische Recheneinheit ist.
Vorzugsweise führt das Mittel zur Auswertung der Fahrzeugdaten folgende Schritte aus:
- Messen der Umlaufgeschwindigkeit jedes einzelnen Rades (V.vl, V.vr, V.hl, V.hr) auf an sich bekannte Weise,
- Vergleich der Umlaufgeschwindigkeit des linken Vorderrades (V.vl) mit der des rechten Vorderrades (V.vr),
- Vergleich der Umlaufgeschwindigkeit des linken Hinterrades (V.hl) und der des rechten Hinterrades (V.hr),
- Berechnung der logischen Gleichung in der linken Tabellenspalte der nachfolgenden Tabelle,

| | hl | hr |
|---|---|---|
| V.vl<(V.vr-S2) und | *V | |
| V.hl>(V.hr+S1)= WAHR | | |
| V.vr<(V.vl-S2) und | | *V |
| V.hr>(V.hl+S1)=WAHR | | |
| sonst | kein abgehobenes Rad | |

- Entscheidung in Abhängigkeit der Berechnung gemäß linker Tabellenspalte ob ein Rad freidrehend ist oder nicht, wobei die Eintragung "*V" bedeutet, daß eines der Räder (hinten links = hl, hinten rechts = hr) als freidrehend erkannt wird.

Vorzugsweise kann das Mittel zur Auswertung der Fahrzeugdaten noch überprüfen, in welche Richtung das Fahrzeug fährt, daß heißt ob Vorwärtsfahrt oder Rückwärtsfahrt vorliegt. Liegt Rückwärtsfahrt vor, so wird gemäß dieses bevorzugten Verfahrens in der Tabelle die Bezeichnung der Räder umbenannt, d.h. aus dem Rad vl wird das Rad hr usw.

Die Erfindung betrifft auch eine Vorrichtung zur Durchführung des vorstehend beschriebenen erfindungsgemäßen Verfahrens, welche gekennzeichnet ist durch einen Mikroprozessor (µC) mit Speicher und Ein-Ausgabemitteln, die an die Elektronik eines Fahrdynamik- oder Bremssystems (ABS) und an Fahrzeugsensoren (5) angeschlossen sind.

Weitere vorteilhafte Ausführungsformen der Erfindung ergeben sich aus der nachfolgenden Figurenbeschreibung.

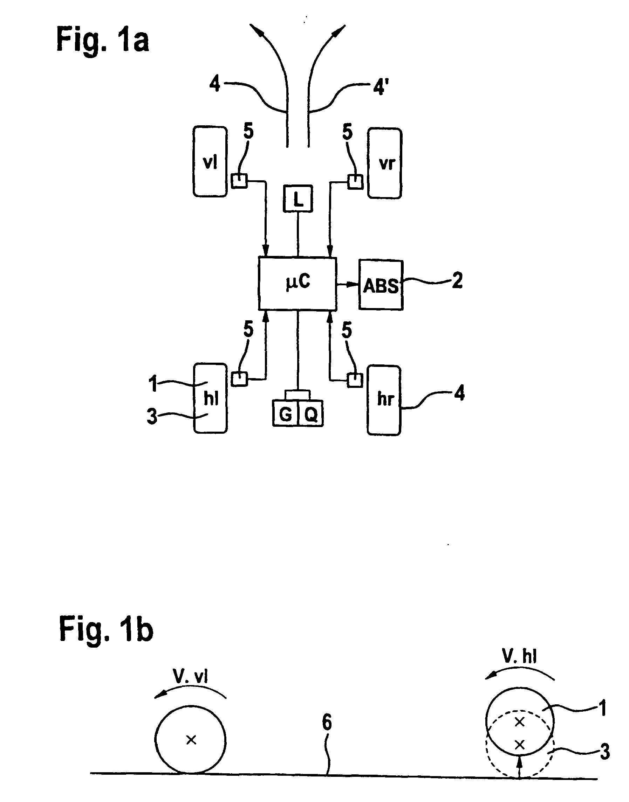

Es zeigen
- Fig. 1a: eine schematische Darstellung der Räder eines Kraftfahrzeuges mit Auswerteelektronik in Aufsicht und
- Fig. 1b: eine schematische Darstellung der Räder in Seiten- ansicht.

In Fig. 1a befinden sich an den Rädern vl (vorn links), vr (vorn rechts), hl (hinten links) und hr (hinten rechts) Radsensoren 5, mit denen die Radumlaufgeschwindigkeit eines jeden Rades gemessen wird. Die Signale der vorzugsweise aktiven Radsensoren werden einer Recheneinheit µC zugeführt und dort verarbeitet. Die verarbeiteten Daten werden dann entweder zu einem weiteren Rechenwerk ABS zum Beispiel eines elektronischen Bremssystems geleitet oder, was bauteilsparend ist, direkt im Rechenwerk *µ*C weiterverarbeitet. Die Zeichnung stellt zwei getrennte Rechenwerke *µ*C und ABS dar. Es ist aber ebensogut möglich, daß die Aufgabe der Erkennung gemäß dem erfindungsgemäßen Verfahren auch von einer ohnehin im Fahrzeug vorhandenen Elektronik mitübernommen wird. Im einfachsten bevorzugten Fall muß hierzu nur die Software des ABS bzw. elektronischen Systems geändert werden. Zusätzliche im Fahrzeug vorhandene Sensoren, wie Lenkwinkelsensor L, Gierratensensor G und Querbeschleunigungsensor Q können zur Erkennung einer Kurvenfahrt herangezogen werden. Diese Sensoren sind daher mit dem Rechenwerk *µ*C und/oder dem ABS verbunden.
Befindet sich das Fahrzeug 2 in einer Linkskurve 4, so löst sich das Hinterrad 1 bei hinreichend schnell gefahrener Kurve von der Fahrbahn 6 ab. Diese Situation ist in Fig. 1b dargestellt, worin Bezugszeichen 1 das abgelöste und Bezugszeichen 3 das in Fahrbahnkontakt stehende Hinterrad bezeichnet.

## Patentansprüche

1. Verfahren zur Erkennung eines freidrehenden Rades (1) in einem Kraftfahrzeug (2) in einem extremen Fahrzustand, mit linkem und rechtem Vorderrad (vl, vr) und linkem und rechtem Hinterrad (hl,hr), wobei die Räder jeweils Informationen über deren Umlaufgeschwindigkeit (V.vl, V.vr, V.hl, V.hr) an ein Mittel zur Auswertung von Fahrzeugdaten (*µ*C) übermitteln,
**dadurch gekennzeichnet, daß** das Mittel zur Auswertung von Fahrzeugdaten überprüft, ob und in welche Kurvenrichtung (4,4') eine Kurvenfahrt vorliegt, und, ob die Umlaufgeschwindigkeit des auf der Kurveninnenseite nachlaufenden Rades (1) von einer theoretisch möglichen Umlaufgeschwindigkeit dieses Rades (3) bei Kontakt mit der Fahrbahn (6) abweicht.

2. Verfahren nach Anspruch 1, **dadurch gekennzeichnet, daß** die theoretisch mögliche Umlaufgeschwindigkeit mit der Umlaufgeschwindigkeit des auf der Kurvenaußenseite liegenden nachlaufenden Rades (4) berechnet wird.

3. Verfahren nach Anspruch 1 oder 2, **dadurch gekennzeichnet, daß** die theoretisch mögliche Umlaufgeschwindigkeit mit der Fahrzeuggeschwindigkeit berechnet wird.

4. Verfahren nach mindestens einem der Ansprüche 1 bis 3, **dadurch gekennzeichnet, daß** die Kurvenfahrt und Kurvenrichtung erkannt wird durch eine oder mehrere Maßnahmen aus der Gruppe:
- Vergleich der Umlaufgeschwindigkeiten der vorlaufenden Räder (V.vl,V.vr) miteinander,
- Auswertung des Signals eines Gierratensensors (G),
- Auswertung des Signals eines Lenkwinkelsensors (L),
- Auswertung des Signals eines Querbeschleunigungssensors (Q),
- Auswertung der Umlaufgeschwindigkeit aller Räder (V.vl,V.vr),V.hl,V.hr) über einen zurückliegenden Zeitraum, der vor dem Abheben des Hinterrades liegt.

5. Verfahren nach mindestens einem der Ansprüche 1 bis 4, **dadurch gekennzeichnet, daß** auf ein freidrehendes Rad erkannt wird, wenn die Geschwindigkeit des auf der Kurveninnenseite nachlaufenden Rades größer ist, als die theoretisch maximal mögliche Umlaufgeschwindigkeit dieses Rades bei Kontakt mit der Fahrbahn.

6. Verfahren nach mindestens einem der Ansprüche 1 bis 5, **dadurch gekennzeichnet, daß** die theoretisch maximal mögliche Umlaufgeschwindigkeit die Summe aus der Umlaufgeschwindigkeit des auf der Kurvenaußenseite liegenden nachlaufenden Rades und einem ersten Schwellenwert S1 ist.

7. Verfahren nach mindestens einem der Ansprüche 1 bis 6, **dadurch gekennzeichnet, daß** der erste Schwellenwert S1 eine Funktion S1 = f ( V ) der Fahrzeuggeschwindigkeit V ist.

8. Verfahren nach mindestens einem der Ansprüche 1 bis 7, **dadurch gekennzeichnet, daß** der erste Schwellenwert S1 mindestens so groß ist, wie die maximale Differenz der Umlaufgeschwindigkeiten der nachlaufenden Räder bei geringst möglichem Kurvenradius des Fahrzeugs.

9. Verfahren nach mindestens einem der Ansprüche 1 bis 8, **dadurch gekennzeichnet, daß**, solange auf ein freidrehendes Rad erkannt wurde, die Meßgröße für die Umlaufgeschwindigkeit dieses Rades nicht an weitere im Fahrzeug vorhandene elektronische Systeme, insbesondere elektronische Bremssysteme (ABS), Antriebsschlupfregelungen oder elektronische Fahrdynamiksysteme weitergeleitet wird.

10. Verfahren nach Anspruch 9, **dadurch gekennzeichnet, daß** für die Meßgröße der Umlaufgeschwindigkeit des freidrehenden Rades eine Ersatzgröße gebildet wird, die anstelle der nicht herangezogenen Meßgröße an die elektronischen Systeme weitergeleitet wird.

11. Verfahren nach mindestens einem der Ansprüche 1 bis 10, **dadurch gekennzeichnet, daß** auf Kurvenfahrt nur dann erkannt wird, wenn die Größe zur Ermittlung des Kurvenradius einen zweiten Schwellenwert S2 überschreitet.

12. Verfahren nach einem der Ansprüche 1 bis 11, **dadurch gekennzeichnet, daß** die Größe zur Ermittlung des Kurvenradius aus der Differenz der Umlaufgeschwindigkeit der vorlaufenden Räder berechnet wird.

13. Verfahren nach mindestens einem der Ansprüche 1 bis 12, **dadurch gekennzeichnet, daß** das Mittel zur Auswertung folgende Schritte ausführt:
- Messen der Umlaufgeschwindigkeit jedes einzelnen Rades (V.vl, V.vr, V.hl, V.hr) auf an sich bekannte Weise,
- Vergleich der Umlaufgeschwindigkeit des linken Vorderrades (V.vl) mit der des rechten Vorderrades (V.vr),
- Vergleich der Umlaufgeschwindigkeit des linken Hinterrrades (V.hl) und der des rechten Hinterrades (V.hr),
- Berechnung der logischen Gleichung in der linken Tabellenspalte der nachfolgenden Tabelle,
| | hl | hr |
|---|---|---|
| V.vl<(V.vr-S2) und | *V | |
| V.hl>(V.hr+S1)= WAHR | | |
| V.vr<(V.vl-S2) und | | *V |
| V.hr>(V.hl+S1)=WAHR | | |
| sonst | kein abgehobenes Rad | |
- Entscheidung in Abhängigkeit der Berechnung gemäß linker Tabellenspalte ob ein Rad freidrehend ist oder nicht,
wobei die Eintragung "*V" bedeutet, daß eines der Räder (hinten links = hl, hinten rechts = hr) als freidrehend erkannt wird.

14. Vorrichtung zur Durchführung des Verfahrens nach mindestens einem der Ansprüche 1 bis 13, **gekennzeichnet durch** einen Mikroprozessor (*µ*C) mit Speicher und Ein-Ausgabe-mitteln, die an die Elektronik eines Fahrdynamik- oder Bremssystems (ABS) und an Fahrzeugsensoren (5) angeschlossen sind.

## Claims

1. Method for detecting a freely rotating wheel (1) on a motor vehicle (2) in an extreme driving condition, with left and right front wheels (vl, vr) and left and right rear wheels (hl, hr), wherein the wheels in each case supply information about their rotational speed (V.vl, V.vr, V.hl, V.hr) to a means for evaluating vehicle data (µC),
**characterized in that** the means for evaluating vehicle data examines whether there is a cornering maneuver and which is the direction of curve (4, 4'), and whether the rotational speed of the trailing wheel (1) on the inside of the curve differs from a theoretically possible rotational speed of this wheel (3) when in contact with the roadway (6).

2. Method as claimed in claim 1,
**characterized in that** the theoretically possible rotational speed is calculated from the rotational speed of the trailing wheel (4) that is on the outside of the curve.

3. Method as claimed in claim 1 or 2,
**characterized in that** the theoretically possible rotational speed is calculated from the vehicle speed.

4. Method as claimed in at least one of claims 1 to 3,
**characterized in that** the cornering maneuver and the curve direction is preferably detected by one or more measures from the group:
- comparison of the rotational speeds of the leading wheels (V.vl, V.vr),
- evaluation of the signal of a yaw rate sensor (G),
- evaluation of the signal of a steering angle sensor (L),
- evaluation of the signal of a transverse acceleration sensor (Q),
- evaluation of the rotational speed of all wheels (V.vl,V.vr,V.hl,V.hr) for a past interval lying before the lifting of the rear wheel.

5. Method as claimed in at least any one of claims 1 to 4,
**characterized in that** a freely rotating wheel is considered to prevail when the speed of the trailing wheel on the inside of the curve is higher than the theoretically maximum possible rotational speed of this wheel when having contact with the roadway.

6. Method as claimed in at least any one of claims 1 to 5,
**characterized in that** the theoretically maximum possible rotational speed is the sum of the rotational speed of the trailing wheel on the outside of the curve and a first threshold value S1.

7. Method as claimed in at least any one of claims 1 to 6,
**characterized in that** the first threshold value S1 is a function S1 = f ( V ) of the vehicle speed V.

8. Method as claimed in at least any one of claims 1 to 7,
**characterized in that** the first threshold value S1 is at least as great as the maximum difference of the rotational speeds of the trailing wheels with a smallest possible curve radius of the vehicle.

9. Method as claimed in at least any one of claims 1 to 8,
**characterized in that** as long as a freely rotating wheel is considered to prevail, the measured variable of the rotational speed of this wheel will not be passed on to further electronic systems provided in the vehicle, in particular electronic brake systems (ABS), traction slip control systems or electronic driving dynamics systems.

10. Method as claimed in claim 9,
**characterized in that** a substitute variable is produced for the measured variable of the rotational speed of the freely rotating wheel which, instead of the measured variable that is not used, is sent to the electronic systems.

11. Method as claimed in at least any one of claims 1 to 10,
**characterized in that** cornering is considered to prevail only if the quantity for determining the curve radius exceeds a second threshold value S2.

12. Method as claimed in any one of claims 1 to 11,
**characterized in that** the quantity for determining the curve radius is calculated from the difference of the rotational speeds of the leading wheels.

13. Method as claimed in at least any one of claims 1 to 12,
**characterized in that** the means for evaluation performs the following steps:
- measuring the rotational speed of each single wheel (V.vl, V.vr, V.hl, V.hr) in a per se known manner,
- comparing the rotational speed of the left front wheel (V.vl) with the rotational speed of the right front wheel (V.vr),
- comparing the rotational speed of the left rear wheel (V.hl) with the rotational speed of the right rear wheel (V.hr),
- calculating the logic equation in the left table column of the following table
| | hl | hr |
|---|---|---|
| V.vl<(V.vr-S2) and | *V | |
| V.hl>(V-hr+S1)= TRUE | | |
| V.vr<(V.vl-S2) and | | *V |
| V.hr>(V.hl+S1)= TRUE | | |
| otherwise | no lifted wheel | |
- deciding in dependence on the calculation according to the left table column whether a wheel is freely rotating or not,
wherein the entry '*V' means that one of the wheels (rear left = hl, rear right = hr) is identified as rotating freely.

14. Device for implementing the method as claimed in at least any one of claims 1 to 13,
**characterized by** a microprocessor (µC) with memory and input/output means connected to the electronics of a driving dynamics system or brake system (ABS) and to vehicle sensors (5).

## Revendications

1. Procédé de détection d'une roue (1) tournant librement d'un véhicule automobile (2) dans un état de conduite extrême, avec roue avant gauche et roue avant droite (vl,vr) et roue arrière gauche et arrière droite (hl,hr) les roues transmettant chacune des informations relatives à leur vitesse de rotation (V.vl, V.vr, V.hl, V.hr) à un moyen d'exploitation des données du véhicule (µC),
**caractérisé en ce que** le moyen d'exploitation des données du véhicule vérifie si et dans quelle direction de courbe (4, 4') existe une conduite en courbe, et si la vitesse de rotation de la roue en retard (1) sur le côté intérieur de la courbe s'écarte d'une vitesse de rotation théoriquement possible de cette roue (3) en cas de contact avec la chaussée (6).

2. Procédé selon la revendication 1, **caractérisé en ce que** la vitesse de rotation théoriquement possible est calculée avec la vitesse de rotation de la roue en retard (4) située sur le côté extérieur de la courbe.

3. Procédé selon la revendication 1 ou 2, **caractérisé en ce que** la vitesse de rotation théoriquement possible est calculée avec la vitesse du véhicule.

4. Procédé selon l'une au moins des revendications 1 à 3, **caractérisé en ce que** la conduite en courbe et la direction de la courbe sont reconnues par un ou plusieurs moyens du groupe :
- comparaison des vitesses de rotation des roues en avance (V.vl, V.vr) les unes aux autres,
- exploitation du signal d'un capteur d'embardée (G),
- exploitation du signal d'un capteur d'angle de braquage (L),
- exploitation du signal d'un capteur d'accélération transversal (Q),
- exploitation de la vitesse de rotation de toutes les roues (V.vl, V.vr, V.hl, V.hr) pendant un intervalle de temps passé qui se situe avant le soulèvement de la roue arrière.

5. Procédé selon l'une au moins des revendications 1 à 4, **caractérisé en ce qu'**une roue tournant librement est reconnue lorsque la vitesse de la roue en retard sur le côté intérieur de la courbe est supérieure à la vitesse de rotation théoriquement maximale possible de cette roue en cas de contact avec la chaussée.

6. Procédé selon l'une au moins des revendications 1 à 5, **caractérisé en ce que** la vitesse de rotation théoriquement maximale possible est la somme de la vitesse de rotation de la roue en retard située sur le côté extérieur de la courbe et d'une première valeur de seuil (S1).

7. Procédé selon l'une au moins des revendications 1 à 6, **caractérisé en ce que** la première valeur de seuil (S1) est une fonction S1=f(V) de la vitesse du véhicule (V).

8. Procédé selon l'une au moins des revendications 1 à 7, **caractérisé en ce que** la première valeur de seuil (S1) est au moins égale à la différence maximale des vitesses de rotation des roues en retard pour le rayon de courbe aussi petit que possible du véhicule.

9. Procédé selon l'une au moins des revendications 1 à 8, **caractérisé en ce que** tant qu'une roue tournant librement a été reconnue, la grandeur de mesure de la vitesse de rotation de cette roue n'est pas transmise à d'autres systèmes électroniques prévus dans le véhicule, en particulier pas à des systèmes de freinage électroniques (ABS), des régulations du glissement d'entraînement ni à des systèmes électroniques de dynamique de conduite.

10. Procédé selon la revendication 9, **caractérisé en ce que** pour la grandeur de mesure de la vitesse de rotation de la roue tournant librement il est formé une grandeur de remplacement qui est transmise aux systèmes électroniques à la place de la grandeur de mesure non utilisée.

11. Procédé selon l'une au moins des revendications 1 à 10, **caractérisé en ce qu'**une conduite en courbe n'est reconnue que si la grandeur pour la détermination du rayon de la courbe dépasse une deuxième valeur de seuil (S2).

12. Procédé selon l'une au moins des revendications 1 à 11, **caractérisé en ce que** la grandeur pour la détermination du rayon de la courbe est calculée à partir de la différence des vitesses de rotation des roues en avance.

13. Procédé selon l'une au moins des revendications 1 à 12, **caractérisé en ce que** des moyens d'exploitation exécutent les étapes suivantes :
- mesure de la vitesse de rotation de chaque roue individuelle (V.vl, V.vr, V.hl, V.hr) de manière connue,
- comparaison de la vitesse de rotation de la roue avant gauche (V.vl) et de la roue avant droite (V.vr),
- comparaison de la vitesse de rotation de la roue arrière gauche (V.hl) et de la roue arrière droite (V.hr),
- calcul de l'équation logique dans la colonne gauche du tableau suivant,
| | hl | hr |
|---|---|---|
| V.vl<(V.vr-S2) et | *V | |
| V.hl>(V.hr+S1) = VRAI | | |
| V.vr<(V.vl-S2) et | | *V |
| V.hr>(V.hl+S1) = VRAI | | |
| sinon | aucune roue soulevée | |
- décision en fonction du calcul selon la colonne gauche du tableau si une roue tourne librement ou non, l'inscription "*V" signifiant que l'une des roues (arrière gauche = hl, arrière droite = hr) est reconnue comme tournant librement.

14. Dispositif pour la mise en oeuvre du procédé selon l'une au moins des revendications 1 à 13, **caractérisé par** un microprocesseur (µC) avec mémoire et moyens d'entrée-sortie qui sont raccordés à l'électronique d'un système de dynamique de conduite ou de freinage (ABS) et à des capteurs (5) du véhicule.
